# EUROPEAN PATENT APPLICATION

(11) **EP 4 800 953 A2**
(43) Date of publication of application: **02.09.2026**
(21) Application number: 26177208.1
(22) Date of filing: 09.01.2019
(51) Int. Cl.: H04L 1/18

(54) **DATA RETRANSMISSION MECHANISM IN TERRESTRIAL OR NON-TERRESTRIAL NETWORKS EXHIBITING A HIGH PROPAGATION DELAY**

(30) Priority: 11.01.2018 EP 18151189
(62) Document number(s) of the earlier application(s) in accordance with Art. 76 EPC: 19700169.6 / 3 738 240
(71) Applicant: Fraunhofer-Gesellschaft zur Förderung der angewandten Forschung e.V., 80686 München (DE)
(72) Inventor: GÖKTEPE, Baris, 10587 Berlin (DE); FEHRENBACH, Thomas, 10587 Berlin (DE); HELLGE, Cornelius, 10587 Berlin (DE); RASCHKOWSKI, Leszek, 10587 Berlin (DE); THOMAS, Robin Rajan, 10587 Berlin (DE); ERKILIC, Tugce, 10587 Berlin (DE); WIRTH, Thomas, 10587 Berlin (DE); SCHIERL, Thomas, 10587 Berlin (DE)
(74) Representative: Zimmermann, Tankred Klaus

(57) **Abstract**

A user equipment transmits data to a receiver of a wireless communication system using resources of a channel granted by the receiver, the channel having a certain channel condition estimated by the receiver. The user equipment is preconfigured with one or more retransmission resources to be used for the retransmission, and, responsive to a change of the channel condition, the user equipment signals to the receiver, together with the data transmission, a retransmission indicating that a retransmission for the data is transmitted, and transmits the retransmission using one or more of the retransmission resources.

## Description

The present application concerns the field of wireless communications, more specifically to a retransmission for data transmitted from a user or user equipment, UE, to a receiver for achieving a reliable data transmission over an unreliable channel or service in situations when there is a high propagation delay between the receiver and the UE. Embodiments provide a retransmission mechanism in terrestrial or non-terrestrial networks exhibiting a high propagation delay between the receiver and the UE, like an improved hybrid automatic repeat request, HARQ, mechanism.

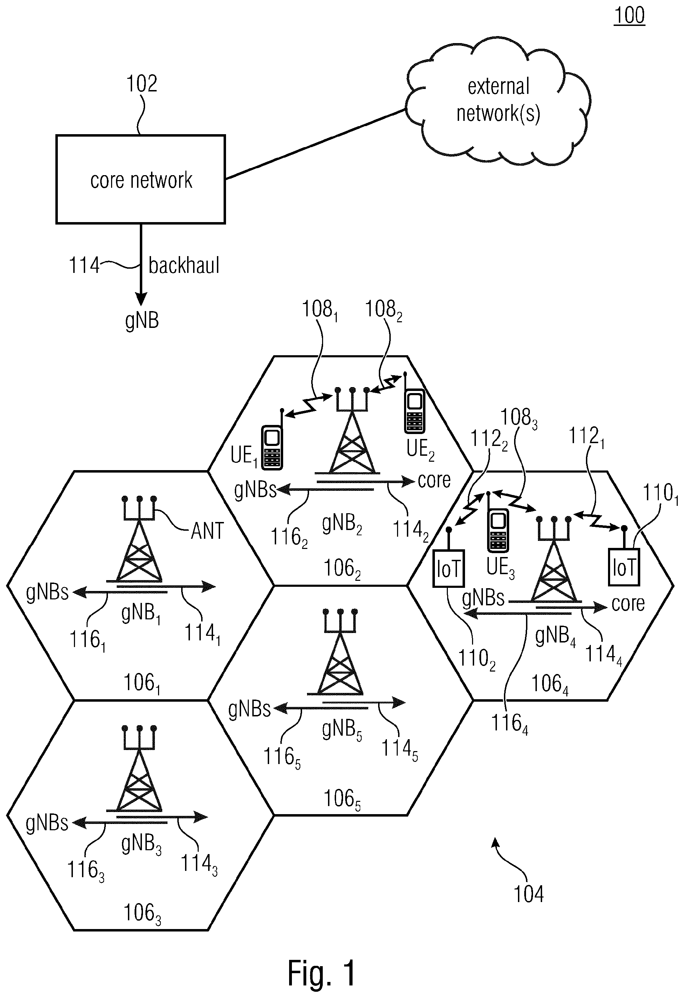

Fig. 1 is a schematic representation of an example of a terrestrial wireless network 100 including a core network 102 and a radio access network 104. The radio access network 104 may include a plurality of base stations gNB₁ to gNB₅, each serving a specific area surrounding the base station schematically represented by respective cells 106₁ to 106₅. The base stations are provided to serve users within a cell. The term base station, BS, refers to as gNB in 5G networks, eNB in UMTS/LTE/LTE-A/ LTE-A Pro, or just BS in other mobile communication standards. A user may be a stationary device or a mobile device. Further, the wireless communication system may be accessed by mobile or stationary IoT devices which connect to a base station or to a user. The mobile devices or the IoT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enable these devices to collect and exchange data across an existing network infrastructure. Fig. 1 shows an exemplary view of only five cells, however, the wireless communication system may include more such cells. Fig. 1 shows two users UE₁ and UE₂, also referred to as user equipment, UE, that are in cell 106₂ and that are served by base station gNB₂. Another user UE₃ is shown in cell 106₄ which is served by base station gNB₄. The arrows 108₁, 108₂ and 108₃ schematically represent uplink/downlink connections for transmitting data from a user UE₁, UE₂ and UE₃ to the base stations gNB₂, gNB₄ or for transmitting data from the base stations gNB₂, gNB₄ to the users UE₁, UE₂, UE₃. Further, Fig. 1 shows two IoT devices 110₁ and 110₂ in cell 106₄, which may be stationary or mobile devices. The IoT device 110₁ accesses the wireless communication system via the base station gNB₄ to receive and transmit data as schematically represented by arrow 112₁. The IoT device 110₂ accesses the wireless communication system via the user UE₃ as is schematically represented by arrow 112₂. The respective base station gNB₁ to gNB₅ may be connected to the core network 102, e.g. via the S1 interface, via respective backhaul links 114₁ to 114₅, which are schematically represented in Fig. 1 by the arrows pointing to "core". The core network 102 may be connected to one or more external networks. Further, some or all of the respective base station gNB₁ to gNB₅ may connected, e.g. via the S1 or X2 interface or XN interface in NR, with each other via respective backhaul links 116₁ to 116₅, which are schematically represented in Fig. 1 by the arrows pointing to "gNBs". The wireless network or communication system depicted in Fig. 1 may by an heterogeneous network having two distinct overlaid networks, a network of macro cells with each macro cell including a macro base station, like base station gNB₁ to gNB₅, and a network of small cell base stations (not shown in Fig. 1), like femto or pico base stations.

For data transmission a physical resource grid may be used. The physical resource grid may comprise a set of resource elements to which various physical channels and physical signals are mapped. For example, the physical channels may include the physical downlink and uplink shared channels (PDSCH, PUSCH) carrying user specific data, also referred to as downlink and uplink payload data, the physical broadcast channel (PBCH) carrying for example a master information block (MIB) and a system information block (SIB), the physical downlink and uplink control channels (PDCCH, PUCCH) carrying for example the downlink control information (DCI), etc. For the uplink, the physical channels may further include the physical random access channel (PRACH or RACH) used by UEs for accessing the network once a UE synchronized and obtained the MIB and SIB. The physical signals may comprise reference signals (RS), synchronization signals and the like. The resource grid may comprise a frame or radioframe having a certain duration, like 10 milliseconds, in the time domain and having a given bandwidth in the frequency domain. The frame may have a certain number of subframes of a predefined length, e.g., 2 subframes with a length of 1 millisecond. Each subframe may include two slots of 6 or 7 OFDM symbols depending on the cyclic prefix (CP) length. A frame may also consist of a smaller number of OFDM symbols, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the 5G or NR, New Radio, standard.

In the wireless communication network as shown in Fig. 1 the radio access network 104 may be a heterogeneous network including a network of primary cells, each including a primary base station, also referred to as a macro base station. Further, a plurality of secondary base stations, also referred to as small cell base stations, may be provided for each of the macro cells.

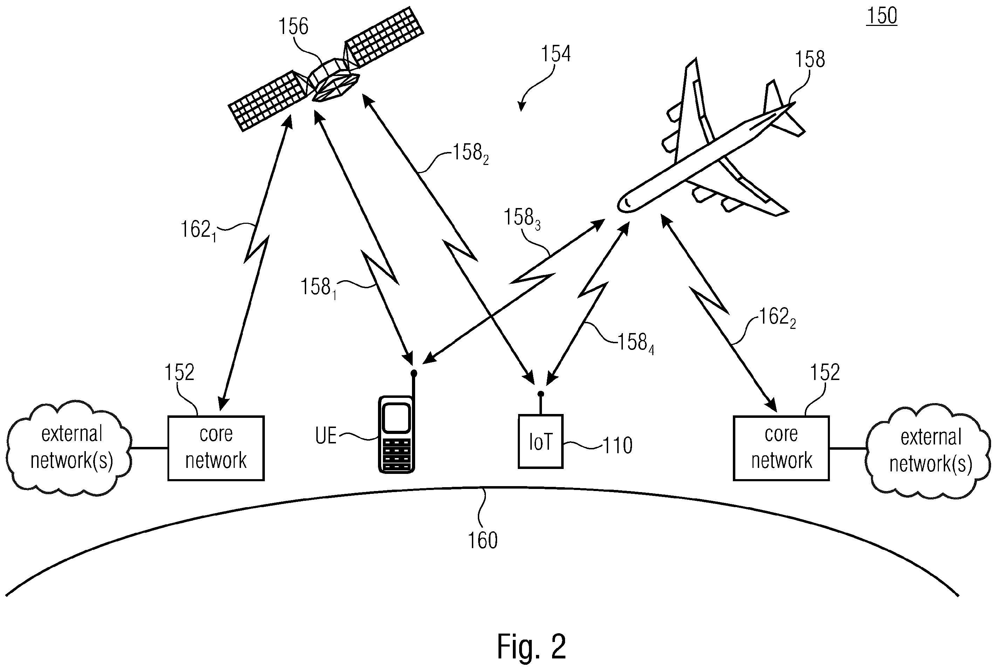

In addition to the above described terrestrial wireless network also non-terrestrial wireless communication networks exist. Fig. 2 is a schematic representation of an example of a non-terrestrial wireless communication network 150 including a core network 152 and a radio access network 154. Other than the terrestrial wireless network of Fig. 1, the non-terrestrial wireless network 150 includes a plurality of spaceborne transceivers 156, like satellites, and/or airborne transceivers 158, like unmanned aircraft systems. The respective spaceborne or airborne transceivers 156, 158 may be implemented in respective spaceborne or airborne vehicles, like the above mentioned satellites or unmanned aircraft systems. The transceivers 156 and 158 are provided to serve one or more users, like the UE or the IoT device 110 shown in Fig. 2, which are provided on or above ground 160. The UE and the IoT device may be devices as described above with reference to Fig. 1. The arrows 158₁ to 158₄ schematically represent uplink/downlink connections for communicating data between the user UE, 110 and the respective transceiver 156, 158. The transceivers 156, 158 are connected to the core network 152 as is schematically represented by the arrows 162₁, 162₂. The above described non-terrestrial wireless communication network or system may operate in a similar way as the terrestrial system described above with reference to Fig. 1, for example in accordance with the LTE-advanced pro standard or the 5G or NR, new radio, standard.

Data communicated between the users UE, 110 and the transceivers 106, 156, 158 of the above described communication networks may be overlaid with noise while being transmitted over the channel 108, 112, 158 so that the data may not be processed correctly or may not be processed at all at the receiver. For example, when the data to be transmitted is encoded using a predefined code, the encoded data is generated at the transmitter and forwarded to the receiver over the channel. During the transmission, the encoded data may be overlaid with noise to such an extent that decoding of the encoded data is not possible, e.g., because of noisy channel situations. To address such a situation, a retransmission mechanism may be employed. For example, when the receiver detects that the encoded data cannot be decoded, a retransmission from the transmitter or sender is requested. For example, a hybrid automatic repeat request, HARQ, may be used to request a retransmission from the transmitter, like the UE, to correct decoding failures. At the transmitter, encoding the data includes generating redundancy that may include redundant bits that are added to the data to be transmitted. During a first transmission only a part of the redundancy may be transmitted. When a retransmission is requested, further parts of the redundancy, also referred to as additional or incremental redundancy, may be send to the receiver. For example, HARQ may employ chase combining (every re-transmission contains the same information - data and parity bits), or incremental redundancy (every retransmission contains different parity bits than the previous one). The retransmission, however, causes a delay due to the additional round-trip time (RTT) which includes the propagation delays over the network and the processing delays at the UE and the receiver.

It is noted that the information in the above section is only for enhancing the understanding of the background of the invention and therefore it may contain information that does not form the prior art that is already known to a person of ordinary skill in the art.

Starting from the prior art discussed above, it is an object underlying the present invention to provide an improved approach for reliably providing data from a user or user equipment to a receiver.

This object is achieved by the subject-matter as defined in the independent claims, and favorable further developments are defined in the pending claims.

Embodiments of the present invention are now described in further detail with reference to the accompanying drawings, in which:
- Fig. 1: shows a schematic representation of an example of a terrestrial wireless communication system;
- Fig. 2: is a schematic representation of an example of a non-terrestrial wireless communication network;
- Fig. 3: is a schematic representation of a wireless communication system for communicating information between a plurality of transmitters and a plurality of UEs operating in accordance with the present invention;
- Fig. 4: illustrates the inventive approach in accordance with an embodiment, wherein. Fig. 4(a) illustrates the communication between a UE and a satellite, and Fig. 4(b) shows a flow diagram illustrating the inventive data retransmission mechanism implemented at the UE in accordance with an embodiment;
- Fig. 5: illustrates a first embodiment for signaling the retransmission to the receiver;
- Fig. 6: illustrates a second embodiment for signaling the retransmission to the receiver;
- Fig. 7: illustrates an embodiment applying the inventive approach to a TDD transmission, and
- Fig. 8: illustrates an example of a computer system on which units or modules as well as the steps of the methods described in accordance with the inventive approach may execute.

Embodiments of the present invention are now described in more detail with reference to the accompanying drawings in which the same or similar elements have the same reference signs assigned.

In wireless communication networks, like those described above with reference to Fig. 1 and Fig. 2, retransmission schemes or mechanisms as those described above may be implemented, however, such mechanisms go together with a propagation delay due to the additional round-trip time for returning the feedback from the receiver to the sender, like the UE. Once the feedback is processed at the sender, the retransmission may be triggered. When considering specific services, like enhanced Mobile BroadBand, eMBB, or Ultra-Reliable Low-Latency Communication, URLLC, services, as provided by 5G or NR the propagation delay may be an issue in case it is not possible to provide the feedback within a few milliseconds to the sender, like the UE. In other words, conventional retransmission mechanisms, like HARQ, provide the feedback, like the ACK/NACK message, from the receiver back to the UE within a few milliseconds, and the decision on whether to resend the code block or not may happen in milliseconds as well. However, in case the propagation delay increases, this retransmission mechanism may not be applicable for specific services like the above mentioned eMBB and URLLC services. For example, in terrestrial networks, like the one illustrated in Fig. 1, the propagation delay, which may be directly proportional to the distance between the sender and the receiver, may increase, e.g., in case of very large cells or directional radio links, so that the feedback from the receiver to the user is provided with an increased delay. Thus, in terrestrial wireless communication systems which operate, for example, on the basis of frequency division duplex, FDD, the feedback may not be provided to the sender within a time frame that is sufficient to cause a retransmission at the user in a way that ensures the proper operation of the time critical services implemented in the system. In other examples, when the wireless communication system operates in accordance with a time division duplex, TDD, transmission, the separation between the respective uplink parts of the TDD frames may be too long so that even in situations in which the feedback is provided sufficiently quick to the user, the overall delay for providing the retransmission may be too high, due to the possibility of sending the retransmission only in the next uplink part of the TDD frame, so it may not be possible to reliably provide the time critical services.

In non-terrestrial wireless communication networks, like those illustrated in Fig. 2, similar problems may exist. Non-terrestrial networks, NTNs, may provide for improved coverage capabilities and reduce vulnerability against physical attacks, when compared to terrestrial networks, and such non-terrestrial networks may foster services, like 5G or NR services, in areas not having a proper communication infrastructure. In addition, also in areas with terrestrial communication infrastructure, NTNs may enhance the reliability by providing a continuity for M2M/IoT devices and may also provide for a 5G or NR network's scalability. Services provided using a NTN may include transport, public safety, automotive, energy, eHealth and finance services.

NTN refers to networks or segments of networks using an airborne or spaceborne vehicle for transmission, i.e., a transceiver of the network communicating with the users and the core network is provided in an airborne or spaceborne vehicle. Spaceborne vehicles may include satellites with different altitudes or orbital periods, like a low earth orbit, LEO, a medium earth orbit, MEO, a geosynchronous orbit, GSO, a geostationary orbit, GEO, or a high earth orbit, HEO, whereas airborne vehicles may include unmanned aircraft systems, UAS, such as a tethered UAS, a lighter than air, LTA, UAS, a heavier than air, HTA, UAS, and a high altitude UAS platform, HAP. Due to the variety of NTN vehicles different radio links may be needed and different channel models may be adopted. For example, for the channel modeling in NTNs an antenna polarization, the Doppler Effect, the propagation delay, and the attenuation effects may be taken into account, as is described, for example, in reference [1].

When considering, as an example, specific services requiring a low latency, for example the 5G or NR use cases for eMBB and URLLC, the propagation delay in NTN architectures, like satellite architectures, may be an issue to be considered. When considering, for example, the latency effects of geostationary platforms, two types of payloads may be distinguished:
- bent pipe payloads (no decoding/coding on board): the Round Trip Time, RTT, is the delay over the path: gateway→satellite→UE→satellite→gateway, and corresponds to twice the one way propagation delay, and
- regenerative payloads (decoding/coding on board): the RTT is the delay over the path: satellite→UE→satellite.

For geostationary satellites, since the position of the satellite is fixed at around 36000 km from earth, the round trip time becomes more than 200 ms, which may cause problems when using GEO satellites for implementing specific time critical services in accordance with 5G or NR. For non-geostationary satellites, the round trip time may be in the order of 10 ms to 20 ms, as is described in reference [2], and the table below shows a comparison of different orbital satellites with different capabilities, such as bent pipe or regenerative payloads, in terms of their distance to the UE and the experienced overall delay.

| | | LEO at 600 km | | LEO at 1500 km | | MEO at 10000 km | |
|---|---|---|---|---|---|---|---|
| Elevatio n angle | Path | Distance D (km) | Delay (ms) | Distance D (km) | Delay (ms) | Distance D (km) | Delay (ms) |
| UE: 10° | satellite→UE | 1932.24 | 6,440 | 3647.5 | 12,15 8 | 14018.16 | 46.727 |
| GW: 5° | satellite→ gateway | 2329.01 | 7.763 | 4101.6 | 13.67 2 | 14539.4 | 48.464 |
| 90° | satellite→UE | 600 | 2 | 1500 | 5 | 10000 | 33.333 |

| Bent pipe satellite | | | | | | | |
|---|---|---|---|---|---|---|---|
| One way delay | gateway→ satellite→UE | 4261.2 | 14.204 | 7749.2 | 25.83 | 28557.6 | 95.192 |
| Round Trip Delay | twice | 8522.5 | 28.408 | 15498.4 | 51.66 1 | 57115.2 | 190.38 |

| Regenerative satellite | | | | | | | |
|---|---|---|---|---|---|---|---|
| One way delay | satellite→UE | 1932.24 | 6.44 | 3647.5 | 12.16 | 14018.16 | 46.73 |
| Round Trip Delay | satellite→UE→ satellite | 3864.48 | 12.88 | 7295 | 24.32 | 28036.32 | 93.45 |

For aerial vehicles, which may be located at an altitude between 8 and 50 km, typically at about 20 km, when compared to satellites or spaceborne vehicles, the round trip time is less, for example in the order of a few milliseconds.

Thus, in the above describe scenarios, the propagation delay may be an issue to be considered for a retransmission mechanism, like a HARQ/ARQ feedback and scheduling mechanism, especially when implementing time critical services in a wireless communication system. To address this issue, embodiments of the inventive approach provides a resource efficient latency reduced retransmission mechanism, like a HARQ mechanism, for terrestrial and non-terrestrial wireless communication networks experiencing an increased propagation delay between the user and the receiver. More specifically, the inventive approach provides a user equipment, a receiver, a wireless communication system and methods as described below.

### User Equipment

The present invention provides a user equipment,
wherein the user equipment is configured to transmit data to a receiver of a wireless communication system using resources of a channel granted by the receiver, the channel having a certain channel condition estimated by the receiver, and wherein the user equipment is preconfigured with one or more retransmission resources to be used for the retransmission, and
wherein, responsive to a change of the channel condition, the user equipment is configured to
   signal to the receiver, together with the data transmission, a retransmission indicating that a retransmission for the data is transmitted, and
   transmit the retransmission using one or more of the retransmission resources.

The present invention provides a method for transmitting in a wireless communication system data from a user equipment to a receiver, wherein the user equipment is preconfigured by the receiver with one or more resources to be used for a retransmission for the data, the method comprising:
granting, by the receiver, resources of a channel for the transmission of the data from the user equipment to the receiver, the channel having a certain channel condition estimated by the receiver, and
transmitting, by the user equipment, the data to the receiver using the resources granted by the receiver,
determining the channel condition at the user equipment,
responsive to a change of the channel condition, signaling to the receiver, together with the data transmission, a retransmission indicating that a retransmission for the data is transmitted, and
transmitting the retransmission using one or more of the retransmission resources.

In accordance with embodiments, the signaling of the retransmission is decodable at the receiver independent from the data transmission, and/or the signaling of the retransmission is transmitted in a dedicated region of the data transmission, the dedicated region being known at the receiver.

In accordance with embodiments, the user equipment is configured to encode the signaling of the retransmission using a robust coding scheme, e.g., a coding scheme being more robust than a coding scheme used for encoding the data to be transmitted.

In accordance with embodiments, the user equipment is configured to signal to the receiver, together with the data transmission, the retransmission resource on which the user equipment transmits the retransmission for the data.

In accordance with embodiments, the user equipment is configured to signal the retransmission using:
a control information block inserted into the data transmission, or
a control information block preceding or following the data, or
a predefined signal inserted into the data transmission, or
a predefined signal preceding or following the data.

In accordance with embodiments, the control information block, e.g. an Uplink Control Information, UCI, block, or the predefined signal, e.g., a Demodulation Reference Signal, DMRS, sequence with a cyclic shift, indicates whether a retransmission is performed or not.

In accordance with embodiments, the control information block includes:
a retransmission indicator and a retransmission index, the retransmission indicator indicating whether a retransmission is performed or not, and the retransmission index indicating the retransmission resource, or
a retransmission index having a certain value, wherein the certain value is selected from a plurality of values including:
   a value indicating that no retransmission is performed, and
   one or more value indicating the one or more retransmission resources.

In accordance with embodiments, the predefined signal includes a DMRS sequence with a certain cyclic shift, wherein the certain cyclic shift is selected from a plurality of cyclic shifts including:
a cyclic shift indicating that no retransmission is performed, and
one or more cyclic shifts indicating the one or more retransmission resources.

In accordance with embodiments, the predefined signal includes a certain DMRS sequence, which may have associated therewith a cyclic shift, wherein the certain DMRS sequence is selected from a plurality of DMRS sequences including:
a DMRS sequence indicating that no retransmission is performed, and
one or more DMRS sequences indicating the one or more retransmission resources.

In accordance with embodiments, the user equipment is configured to select the retransmission resource from a plurality of retransmission resources, the plurality of retransmission resources being outside the resources granted by the receiver for the data transmission.

In accordance with embodiments, the user equipment is configured to randomly select the retransmission resource from the plurality of retransmission resources.

In accordance with embodiments, the user equipment is configured to
transmit the retransmission timely offset with respect to the data transmission, and
signal to the receiver, together with the data transmission, a time offset between the transmission and the retransmission.

In accordance with embodiments, the user equipment is configured to receive from the receiver, using, e.g., a DCI message or an RRC message, a configuration message specifying the plurality of retransmission resources, like a grant-free retransmission pool including the plurality of retransmission resources, and/or the time offset.

In accordance with embodiments, the configuration message indicates a frequency range of available resources for the retransmission, and/or the time offset relative to the granted data transmission.

In accordance with embodiments, the user equipment and the receiver are configured to communicate using a Time Division Duplex, TDD, transmission or a Frequency Division Duplex, FDD, transmission.

In accordance with embodiments
when communicating using the Time Division Duplex, TDD, transmission, the user equipment is configured to if required by the channel, signals a retransmission in a scheduled UL part of the TDD frame, and uses, e.g., randomly, additional resources out of predefined resources for the retransmission,
the user equipment is configured to receive, during a downlink, DL, part of a TDD frame, from the receiver a signaling indicating the predefined resources for the retransmission in an upcoming uplink, UL, part of the TDD frame, e.g., using a control information like DCI or RRC, or the user equipment is preconfigured with the predefined resources for the retransmission.

In accordance with embodiments, the user equipment is configured to
receive from the receiver the UL grant, based on the channel estimate by receiver,
prepare the UL data transmission,
determine whether a redundancy for the UL data transmission is sufficient for the channel given a current channel condition,
in case a channel estimate at the user equipment indicates a channel condition with sufficient redundancy, perform a regular UL data transmission using the granted resources, the regular UL data transmission not including a signaling of a retransmission, and
in case the channel estimate at the user equipment indicates a channel condition without sufficient redundancy, perform
   the UL data transmission using the granted resources including the signaling of the retransmission, and
   a retransmission of additional or incremental redundancy on the retransmission resource outside the granted resources.

In accordance with embodiments, the user equipment is configured to estimate the channel between the user equipment and the receiver.

In accordance with embodiments, the user equipment is configured to transmit the data using one or more data blocks or data frames, wherein the signaling of the retransmission is included in at least one of the data blocks or data frames.

In accordance with embodiments, the user equipment is configured to initiate or cause the retransmission without a feedback from the receiver, e.g., only based on a current channel condition of the channel used for the data transmission.

In accordance with embodiments, the retransmission includes one or more of the following:
chase combining, and
incremental redundancy.

In accordance with embodiments,
in case of chase combining, the user equipment is configured to include into the retransmission the same information as in original transmission, or
in case of incremental redundancy, the user equipment is configured to include into the retransmission different parity bits than the in the original transmission, wherein the number of parity bits to be added to the retransmission parts may be determined based on the current channel condition.

In accordance with embodiments, the user equipment is configured to receive a message causing the user equipment to disable, e.g., temporarily, the retransmission mechanism and to use the resources in the retransmission pool for other purposes, like a regular data transmission.

### Receiver

The present invention provides a receiver,
wherein the receiver is configured to receive data transmitted by a user equipment using resources of a channel of a wireless communication system granted by the receiver, and wherein the user equipment is preconfigured with one or more retransmission resources to be used for the retransmission, and
wherein the receiver is configured to
   decode from the data transmission of the user equipment a signaling indicating that a retransmission for the data is transmitted, and
   decode the retransmission on one or more of the retransmission resources.

The present invention provides a receiver,
wherein the receiver is configured to receive data transmitted by a user equipment using resources of a channel of a wireless communication system granted by the receiver, and
wherein the receiver is configured to provide to the user equipment a configuration message using, e.g., a DCI message or an RRC message, the configuration message configuring the user equipment for the retransmission on one or more retransmission resources, the user equipment using the one or more retransmission resources for a retransmission, like additional or incremental redundancy, for the data.

The present invention provides a method for receiving in a wireless communication system data from a user equipment at a receiver, wherein the user equipment is preconfigured by the receiver with one or more resources to be used for a retransmission for the data, the method comprising:
receiving, at the receiver, data transmitted by the user equipment using resources of a channel of the wireless communication system granted by the receiver,
decoding from the data transmission of the user equipment a signaling indicating that a retransmission for the data is transmitted, and
decoding the retransmission on one or more of the retransmission resources.

In accordance with embodiments, the receiver is configured to decode from the data transmission of the user equipment one or more of:
a control information block inserted into the data transmission, e.g. an Uplink Control Information, UCI, block, and indicating whether a retransmission is performed or not, or
a predefined signal inserted into the data transmission, e.g., a Demodulation Reference Signal, DMRS, sequence with a cyclic shift, and indicating whether a retransmission is performed or not.

In accordance with embodiments, the receiver is configured to decode from the data transmission of the user equipment a time offset between the transmission and the retransmission.

In accordance with embodiments, the receiver is configured to provide to the user equipment a configuration message using, e.g., a DCI message or an RRC message, the configuration message configuring the user equipment for the retransmission on the one or more retransmission resources.

In accordance with embodiments, the receiver is configured to signal to the user equipment the one or more retransmission resources to be used for the retransmission, e.g., following a request for a UL transmission from the user equipment or together with a UL grant.

In accordance with embodiments, the configuration message specifies the plurality of retransmission resources, like a grant-free retransmission pool including the plurality of retransmission resources, and/or the time offset, and wherein the configuration message may indicate, e.g., a frequency range of available resources for the retransmission, and/or the time offset relative to the granted data transmission.

In accordance with embodiments, the receiver is configured to signal to the user equipment a modification of the preconfigured resources of the retransmission pool or a subset of the preconfigured resources of the retransmission pool to be used for the retransmission, e.g., following a request for a UL transmission from the user equipment or together with a UL grant.

In accordance with embodiments, the receiver and the user equipment are configured to communicate using a Time Division Duplex, TDD, transmission or a Frequency Division Duplex, FDD, transmission

In accordance with embodiments, when communicating using the Time Division Duplex, TDD, transmission, the receiver is configured to signal to the user equipment resources for the retransmission in the upcoming UL part of a TDD frame, e.g., using a control information like DCI or RRC, during the DL part of the TDD frame.

In accordance with embodiments, responsive to decoding the data transmission received from the user equipment, the receiver is configured to not send any feedback regarding the decoded data transmission back to the user equipment.

In accordance with embodiments, the receiver is configured to transmit to the user equipment a message causing the user equipment to disable, e.g., temporarily, the retransmission mechanism and to use the resources in the retransmission pool for other purposes, like a regular data transmission.

In accordance with embodiments, the receiver is configured to transmit to the user equipment the message responsive to a predefined condition in the wireless communication system, e.g., a network load exceeding a predefined level, or a type of traffic, or a channel condition, or interference management.

### Wireless Communication System

The present invention provides a wireless communication system, comprising one or more user equipments in accordance with the present invention, and one or more receivers in accordance with the present invention, wherein the wireless communication system includes
a terrestrial network, or
a non-terrestrial network, or
networks or segments of networks using as a receiver an airborne vehicle or a spaceborne vehicle, or
a combination thereof.

In accordance with embodiments,
the user equipment comprises one or more of:
   a mobile or stationary terminal,
   an IoT device,
   a ground based vehicle,
   an aerial vehicle,
   a drone,
   a building, or
   any other item or device provided with network connectivity enabling the item/device to communicate using the wireless communication network, like a sensor or actuator, and
the receiver comprises one or more:
   a macro cell base station, or
   a small cell base station, or
   a spaceborne vehicle, like a satellite or a space vehicles at a specific altitude and orbital period, e.g., a low earth orbit (LEO), a medium earth orbit (MEO), a geosynchronous orbit (GSO), a geostationary orbit (GEO), or a high earth orbit (HEO), or
   an airborne vehicle, like a unmanned aircraft system (UAS), e.g., a tethered UAS, a lighter than air UAS (LTA), a heavier than air UAS (HTA) and a high altitude UAS platforms (HAPs), or
   any transmission/reception point (TRP) enabling an item or a device provided with network connectivity to communicate using the wireless communication network.

In accordance with embodiments, the wireless communication system uses an Inverse Fast Fourier Transform, IFFT, based signal, wherein the IFFT based signal includes OFDM with CP, DFT-s-OFDM with CP, IFFT-based waveforms without CP, f-OFDM, FBMC, GFDM or UFMC.

### Computer Program Product

The present invention provides a computer program product comprising instructions which, when the program is executed by a computer, cause the computer to carry out the one or more methods of in accordance with the present invention.

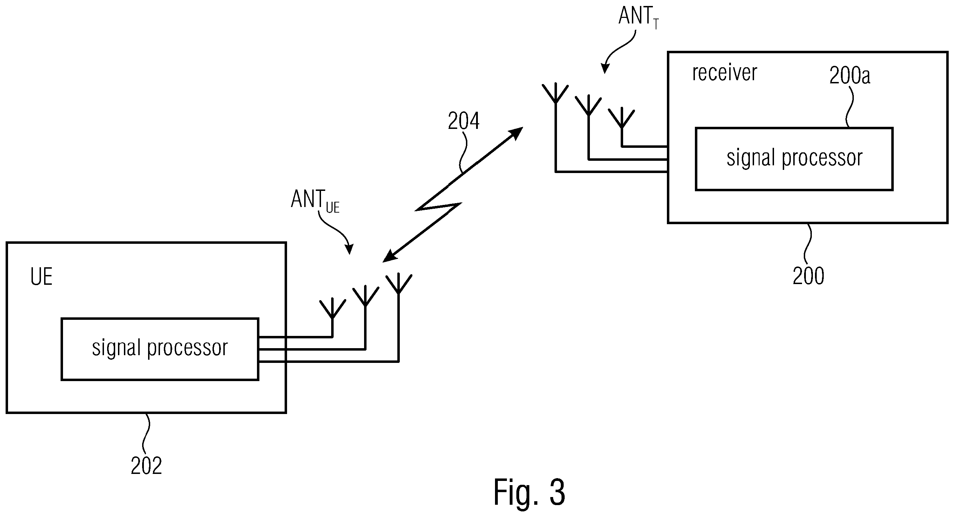

Embodiments of the present invention may be implemented in a wireless communication system as depicted in Fig. 1 or Fig. 2 including receivers or transceivers, like base stations in a terrestrial network or transceiver platforms in a non-terrestrial network, and users, like mobile or stationary terminals or IoT devices, as mentioned above. Fig. 3 is a schematic representation of a wireless communication system for communicating information between a receiver 200 and a UE 202. The receiver 200 and the UE 202 may communicate via a wireless communication link or channel 204, like a radio link. The receiver 200 includes one or more antennas ANT_{T} or an antenna array having a plurality of antenna elements, and a signal processor 200a. The receiver 200 may operate in accordance with the inventive teachings described herein. The UE 202 includes one or more antennas ANT_{UE} or an antenna array having a plurality of antenna elements, and a signal processor 202a. The UE 202 may operate in accordance with the inventive teachings described herein.

In accordance with an aspect of the inventive approach, a user equipment 202 is provided. The user equipment 202, e.g. using its signal processor 202a, transmits data to the receiver 200 of the wireless communication system using resources of the channel 204 granted by the receiver 200. The channel 204 has a certain channel condition estimated by the receiver 200. The user equipment 202 is preconfigured with one or more retransmission resources to be used for the retransmission. Responsive to a change of the channel condition, the user equipment 202 signals to the receiver 200, together with the data transmission, a retransmission indicating that a retransmission for the data is transmitted, and transmits the retransmission using one or more of the retransmission resources.

In accordance with another aspect of the inventive approach, a receiver 200 is provided. The receiver 200, e.g. using its signal processor 202a, receives data transmitted by the user equipment 200 using resources of the channel 204 of the wireless communication system granted by the receiver 200. The user equipment 202 is preconfigured with one or more retransmission resources to be used for the retransmission. The receiver 200 decodes from the data transmission of the user equipment 202 a signaling indicating that a retransmission for the data is transmitted, and decodes the retransmission on one or more of the retransmission resources.

In accordance with yet another aspect of the inventive approach, a receiver 200 is provided. The receiver 200, e.g. using its signal processor 202a, receives data transmitted by the user equipment 200 using resources of the channel 204 of the wireless communication system granted by the receiver 200. The receiver 200 provides to the user equipment 202 a configuration message using, e.g., a DCI message or a Radio Resource Control, RRC, message, the configuration message specifying a plurality of retransmission resources, like a grant-free retransmission pool including the plurality of retransmission resources outside the granted resources, and/or a time offset, the user equipment using one or more of the plurality of retransmission resources for a retransmission, like additional or incremental redundancy, for the data.

Thus, in accordance with the inventive approach, to address the issue of increased or high propagation delays that may occur in wireless communication systems, like those described above with reference to Fig. 1 and Fig. 2, rather than providing a feedback, as is usual in conventional approaches, dependent on an actual channel condition the UE may decide on its own to send the retransmission, without feedback from the receiver. For example, in LTE and NR, the HARQ feedback may be send for each transport block, TB, which indicates the success of the reception and the feedback is used to schedule the retransmission in case of a decoding or reception failure. In accordance with the inventive approach, to avoid the drawbacks associated with the propagation delay that may be experienced in networks as described above, a resource efficient retransmission scheme is provided which sends the retransmission or redundancy earlier. In accordance with embodiments the retransmission is not triggered by the receiver, i.e., the retransmission is decided by the UE without or independent from a feedback from the receiver. The inventive approach, thereby, avoids the additional propagation time needed for transmitting the feedback in case of a transmission failure, thereby reducing the time for sending the retransmission and, thereby, allowing the implementation of time critical services, like those described above, also in wireless communication networks experiencing increased propagation delays as explained above.

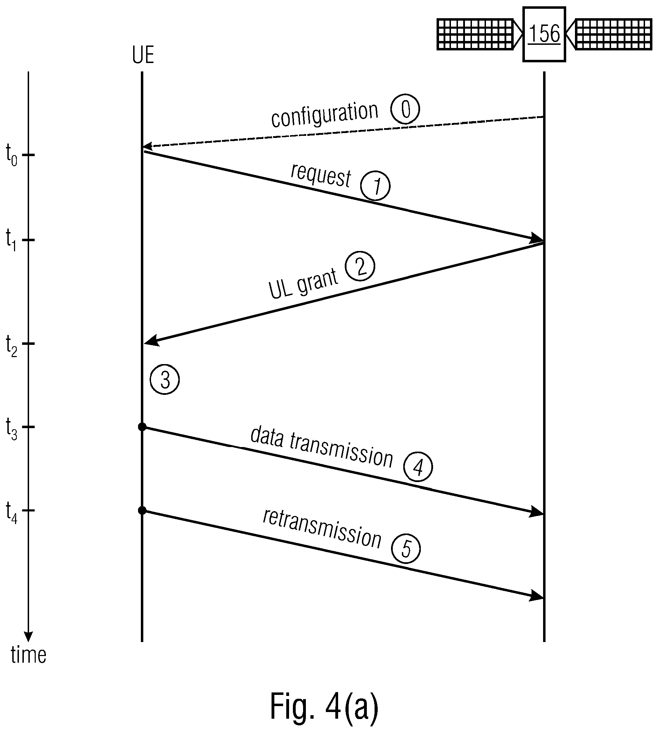

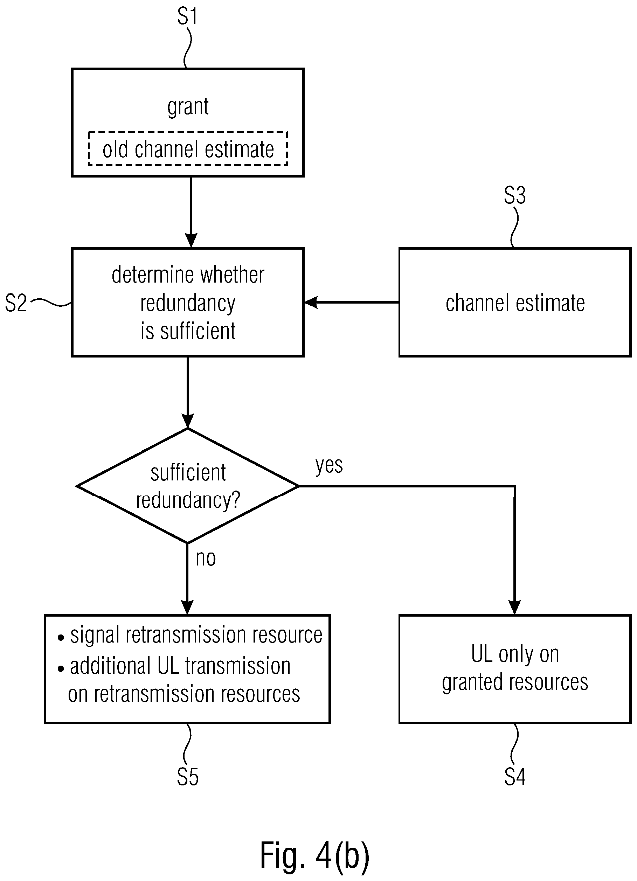

Fig. 4 illustrates the inventive approach in accordance with an embodiment. Fig. 4(a) illustrates the communication between a UE and a receiver, like a satellite 156, and Fig. 4(b) shows a flow diagram illustrating the inventive data retransmission mechanism implemented at the UE in accordance with an embodiment.

As is shown in Fig. 4(a), at an initial time t₀ the UE sends a request ① to the satellite so as to request an uplink transmission from the UE to the satellite 156. The satellite 156 performs a channel estimation of a channel between the satellite 156 and the UE at time t₁, and sends a UL grant ② to the UE. The UL grant message ② sent by the satellite 156 to the UE may indicate the resources for the uplink transmission and the time at which the uplink transmission is to be performed, e.g., time t₃ in the example of Fig. 4(a). The UE receives, at time t₂, the UL grant ② and prepares ③ the UL transmission. Dependent on a current channel condition between the UE and the satellite 156, which may have changed with respect to the condition at the time t₁, the UE may decide that a data transmission ④ that is initiated at time t₃ includes information for the satellite 156 indicating that a retransmission will occur at time t₄ on a retransmission resource that may be indicated in the data transmission ④. At the time t₄, the UE performs the retransmission ⑤ to provide additional data, like additional or incremental redundancy or the like, to the satellite 156 so as to ensure proper decoding of the data at the satellite 156 despite the fact that the channel condition may have become worse when compared to the channel condition as estimated by the satellite 156 at the time t₁. Thus, without feedback and thereby without the increased delay needed for propagating the feedback from the satellite 156 to the UE, the retransmission may be triggered earlier when the UE estimates that the channel condition got worse when compared to the initial channel condition. In case the UE determines upon preparing ③ the UL transmission that the channel condition, when compared to time t₁, did not significantly change, only the data transmission ④ is performed, and the retransmission ⑤ is omitted. In this case, the data transmission ④ includes only the data without any signaling related to the retransmission.

As is indicated in Fig. 4(a), initially, for example at a time when the UE connects to the wireless communication system, the satellite 156 may send a configuration message ⓪ to the UE, for example as part of the information exchanged for establishing the connection of the UE to the wireless network. The configuration message ⓪ may preconfigure the UE with a set of resources that may be used for retransmission, for example a specific frequency band and/or time offset between the data information ④ and the retransmission ⑤. The configuration message may be part of the RRC signaling. In other words, the receiver 156 may configure a resource pool, like a frequency region, and/or a time offset to the UE, and the UE, in accordance with embodiments, may randomly choose one of the resources out of the pool for transmitting the retransmission ⑤ at the preconfigured time offset after the initial transmission ④. For example, the configuration message ⓪ may be part of a DCI message or may be part of the RRC signaling so as to indicate, for example in a new DCI field, the frequency range of available resources for the retransmission ⑤ and/or the time offset relative to the granted uplink transmission ④.

In accordance with an embodiment, the receiver may signal to the UE, e.g., during the UL grant ②, a subset of the retransmission resources to be used, e.g., because the receiver already scheduled other retransmission resources to other UEs. For example, when the retransmission pool has been preconfigured using the configuration message ⓪, the receiver may signal to the UE using, e.g., the UL grant ②, a modification of the preconfigured resources of the retransmission pool or a subset of the preconfigured resources that may be used for the retransmission. In other words, the receiver determines which resources are available for a retransmission before the UL grant. This allows the receiver or network to dynamically schedule users in the UL.

In accordance with yet another embodiment, the retransmission resources may be signaled responsive to the UL request ①, e.g. together with the UL grant ②. For example, the configuration message ⓪ may be used to enable or activate the inventive retransmission scheme at the UE, without explicitly indicating the retransmission resources. When the UL request ① has been received at the receiver, the receiver signals or notifies the UE, using, e.g., the UL grant ②, the retransmission resources so that the UE may select one or more of the signaled resources from the pool for the retransmission. In accordance with examples, the receiver may signal to the UE only a subset of the available retransmission resources, which are known at the receiver, e.g., because the receiver already scheduled other retransmission resources to other UEs. In other words, the receiver determines which resources are available for a retransmission before the UL grant. This allows the receiver or network to dynamically schedule users in the UL and signal as retransmission resources, e.g., the remaining free resources, like resources currently not scheduled to any user. Fig. 4(b) illustrates a flow diagram representing the respective steps/actions taken by the UE upon preparing ③ the UL transmission. Responsive to the receipt of the UL grant message ② at step S1, the UE determines at step S2 whether the redundancy to be included into the data transmission ④, like the number of redundant bits or the number of parity bits, is sufficient when considering the current channel condition. When receiving the grant at step S1, the UE may also receive information about the channel estimate at the time t₁, at which the satellite 156 performed the channel estimation for the channel for the uplink transmission ④ from the UE to the satellite 156. The UE may also perform a channel estimation at step S3 and, on the basis of a comparison of the old channel estimate at the time of generating the UL grant, and the current channel estimate at time t₂, the UE judges a degree by which the channel condition changed. For example, as long as the current channel condition deviates from the old channel condition by a value below a specific threshold, it is determined that the redundancy provided in the data transmission 4 is sufficient so that, at step S4, the uplink transmission ④ is performed only on the granted resources without including any additional information about a retransmission, and without performing the retransmission ⑤.

In case it is determined that the deviation of the channel estimate is above the threshold, i.e., the channel got worse to a degree that it is assumed that the redundancy in the data transmission ④ will not be sufficient to allow the receiver 156 to successfully decode the data, the UE includes, in step S5, into the data transmission ④ a signaling of a retransmission. In accordance with embodiments the signaling may also include information about the retransmission resource used for transmitting additional redundancy at the offset specified, for example, in the configuration message ⓪. At the time t₄ the uplink retransmission ⑤ is performed on one or more retransmission resources, e.g., indicated to the receiver 156 in the message ④. Thus, the receiver 156, in this case, receives, via data transmission ④ and retransmission ⑤, sufficient data allowing him to successfully decode the data to be transmitted in the uplink from the UE to the receiver 156. In accordance with embodiments, UE encodes the signaling of the retransmission using a robust coding scheme, e.g., a coding scheme being more robust than a coding scheme used for encoding the data to be transmitted.

In accordance with embodiments, dependent on the degree by which the channel estimate deviates from the old channel estimate, the UE may select more than one retransmissions on different resources allocated for the retransmission, i.e., in addition to retransmission message ⑤, another retransmission message may be sent on a different retransmission resource to the receiver 156 for improving the decodability of the received data.

In accordance with embodiments, dependent on the degree by which the channel estimate deviates from the old channel estimate, the UE may decide about the number of parity bits to be added to the retransmission, e.g., the number of parity bits in the retransmission may be increased with a decrease in the channel condition.

In the embodiment described with reference to Fig. 4, the UE, upon preparing ③ the UL transmission, was described to include into the data transmission ④ an indication of the retransmission resource to be used for the retransmission at the time t₄. However, the present invention is not limited to such approaches, rather, in accordance with other embodiments, instead of indicating the specific resource on which the retransmission will occur, it is only signaled that a retransmission will occur. The retransmission pool including the plurality of possible retransmission resources has been preconfigured by the receiver 156, so that, when receiving in the data transmission ④ of Fig. 4(a) only a signaling that a retransmission will occur - without explicit reference to the actual resource used for the retransmission, the receiver may monitor the resources of the retransmission pool for additional transmissions so as to obtain for the data transmission ④ the retransmission, like the additional or incremental redundancy, for supporting decoding of the data at the receiver. In other words, in accordance with this embodiment, the receiver 156 knows where to look for the retransmission at what time so as to receive the retransmission, like the redundancy information, for the data.

In accordance with yet other embodiments, the time offset between the data transmission ④ and the retransmission ⑤ may not be pre-configured by the receiver 156, and the time offset may be selected at the UE side and signaled to the receiver 156 together with the information that a retransmission will take place.

In accordance with embodiments, different approaches may be implemented for indicating the retransmission in the data transmission ④ (see Fig. 4(a)).

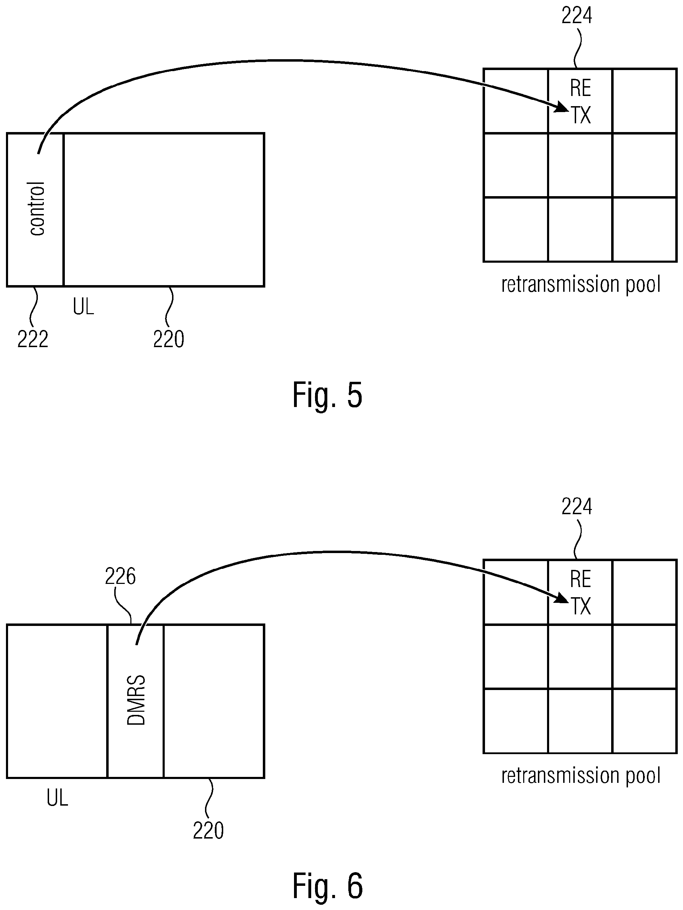

Fig. 5 illustrates a first embodiment for signaling the retransmission to the receiver. The data frame or data block 220 for the uplink, UL, includes an additional control information block 222, for example at the beginning of the uplink frame 220 or, in accordance with other embodiments, at any other predefined location within the uplink frame 220. At step S5 in Fig. 4(b) the UE may put the additional control information 222 into the uplink frame 220 indicating whether a retransmission will be sent or not. Also the resource out of the preconfigured set of resources illustrated in the right-hand part of Fig. 5 that is used for the retransmission may be indicated. The control information 222 may be decoded independently of the data transmission and may be transmitted, as mentioned above, in a dedicated region of the uplink frame 220. The retransmission tool 224 includes a plurality of retransmission resources, like resource elements, REs, from which the UE may randomly select one or more resources for the actual retransmission message ⑤ (see Fig. 4(a)). The number of resources allocated for the retransmission is not limited to the number shown in Fig. 5 but may be any suitable number. In accordance with embodiments, the resources of the retransmission pool 224 are outside of resources used for an uplink transmission, i.e., are outside of resources granted by the UE for the uplink. This ensures that, when a retransmission is performed, that different resources are used for the retransmission for improving the likelihood that the retransmission is successfully received and can be used for supporting decoding at the receiver.

In accordance with the above described embodiment, the control information block is inserted into the data transmission. The present invention is not limited to such embodiments, and in accordance with other embodiments, the control information block may precede or follow the data. In other words, the signaling, e.g., in the form of the control information block may be before, like immediately at the beginning, or after, like immediately at the end, of the transmission. For example, a space for the control block may be provided at the beginning or at the at the end of uplink transmission, which may be left empty if not used.

In accordance with embodiments, the control information block 222 may be part of the uplink control information, UCI, block which may include additional fields, like a retransmission indicator indicating whether a retransmission takes place or not, and a retransmission index indicating which of the resources from the retransmission pool is used for the retransmission. For example, the following UCI fields may be added:
- Retransmission Indicator: Y/N (Yes/No) and/or
- Retransmission Index:
   0 - no retransmission (if no retransmission indicator field is used)
   1 - retransmission on resource 1
   2 - retransmission on resource 2

In accordance with other embodiments, the UCI field may include a retransmission index having a certain value, wherein the certain value is selected from a plurality of values including a value indicating that no retransmission is performed, and one or more value indicating the one or more retransmission resources. For example, the plurality of values for the retransmission index may include the values -1, 1, 2, 3, wherein -1 means that no retransmission is performed, and each of the values 1, 2, 3 indicates one or more resources of the retransmission pool 224 on which the retransmission will be made.

Fig. 6 illustrates a further embodiment for signaling or indicating the retransmission from the UE towards the receiver in data transmission ④ in Fig. 4(a) using a predefined signal. The predefined signal may be inserted into the data transmission, however, the present invention is not limited to such an embodiment. In accordance with other embodiments, the predefined signal may precede or follow the data. In other words, the predefined signal may be before, like immediately at the beginning, or after, like immediately at the end, of the transmission. For example, a space for the predefined signal may be provided at the beginning or at the end of uplink transmission, which may be left empty if not used.

The predefined signal may comprise one or more DMRS sequences, and in the embodiment of Fig. 6 the UE includes a DMRS sequence 226 into the uplink frame 220 at a predefined position. The DMRS sequence 226 has a certain cyclic shift, wherein the certain cyclic shift is selected from a plurality of cyclic shifts including a cyclic shift indicating that no retransmission is performed, and one or more cyclic shifts indicating the one or more retransmission resources. For example, the plurality of cyclic shifts may include a cyclic shift of 0, a cyclic shift of π/4 and a cyclic shift of π/2, wherein the cyclic shift of 0, which may be a default setting, means that no retransmission is performed, and each of the cyclic shift of π/4 and the cyclic shift of π/2 indicates one or more resources of the retransmission pool 224 on which the retransmission will be made.

In accordance with another embodiment, the UE includes a certain DMRS sequence 226 into the uplink frame 220 at a predefined position. The certain DMRS sequence, which may have associated therewith a cyclic shift, may be selected from a plurality of DMRS sequences including a DMRS sequence indicating that no retransmission is performed, and one or more DMRS sequences indicating the one or more retransmission resources.

In accordance with embodiments, the inventive approach may be implemented in systems in which a communication between the UE and the receiver is a frequency division duplex transmission or a time division duplex transmission. As mentioned above, when implementing TDD transmission, a propagation delay associated with the exchange of the feedback information may be an issue despite the fact that the actual propagation delay of signals between the UE and the receiver is short enough. The TDD scheme schedules the downlink and uplink frames at specific times so that following an uplink from the UE to the receiver, and determining at the receiver that a retransmission is needed, the actual uplink transmission of the retransmission may only occur in a subsequent uplink frame following the original uplink transmission. This may result in a delay of the transmission of the retransmission information to the receiver for a successful decoding of the data which is not sufficient for time critical services to be implemented by the system. To address this issue, the inventive approach may be implemented for a TDD transmission.

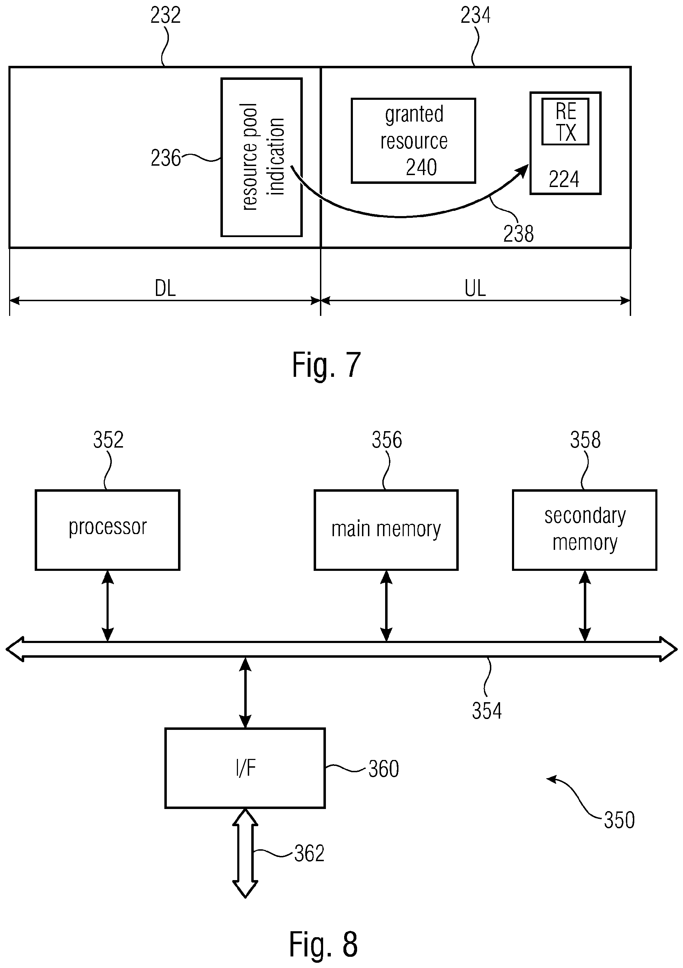

Fig. 7 illustrates an embodiment applying the inventive approach to a TDD transmission, and shows a TDD frame 230 including a downlink, DL, part 232 and an uplink, UL, part 234. The receiver indicates in the DL part 232 of the TDD frame 230 one or more free resources in the upcoming UL part 234 of the TDD frame 230. For example, the receiver may include control information 236, like a DCI or RRC message, into the DL part 232 which indicates in the UL part 234 the retransmission pool 224 as is schematically illustrated by arrow 238. For example, when referring briefly back to Fig. 4, a configuration message ⓪ may be used to enable or activate the inventive retransmission scheme at the UE, without explicitly indicating the retransmission resources. When the UL request ① has been received at the receiver, the receiver signals or notifies the UE in the DL part 232 the retransmission resources of the UL part 234 so that the UE may select one or more of the signaled resources from the pool for the retransmission. In accordance with examples, the receiver may signal to the UE only a subset of the available retransmission resources, which are known at the receiver, e.g., because the receiver already scheduled other retransmission resources to other UEs. In other words, the receiver determines which resources are available for a retransmission before the UL grant. This allows the receiver or network to dynamically schedule users in the UL and signal as retransmission resources, e.g., the remaining free resources, like resources currently not scheduled to any user. In addition, the UE is scheduled with the UL resources 240 to be used for the data transmission ④ (see Fig. 4(a)) in the uplink from the UE to the receiver, and when determining that a channel condition requires additional retransmission, the UE which is scheduled with the UL resources 240 in the UL part 234 may use the additional resources of the resource pool 224, which may be selected randomly, so as to perform, on these resources, the retransmission. The signaling of the retransmission using the granted resources 240 may be done as described above, for example by signaling that a retransmission takes place or that a retransmission takes place together with the retransmission resource used.

In accordance with another embodiment, the configuration message ⓪ may be used to enable or activate the inventive retransmission scheme at the UE and to indicate the retransmission resources that may be used during the UL part 234 of the TDD frame for the retransmission. In case the UE is to select from any of the preconfigured retransmission resources, the UL grant in the DL part 232 may not include a signaling of the retransmission resources. In accordance with other examples, the receiver may signal to the UE in the DL part 232 a modification of the preconfigured resources of the retransmission pool or a subset of the preconfigured resources that may be used for the retransmission. This allows the receiver or network to dynamically schedule users in the UL.

In accordance with embodiments, the receiver may send a message to the UE to disable the retransmission mechanism described above. For example, the receiver may transmit to the user equipment a message causing the user equipment to disable, e.g., temporarily, the retransmission mechanism and to use the resources in the retransmission pool for other purposes, like a regular data transmission. The receiver may transmit the message responsive to a predefined condition in the wireless communication system, for example:
- a high network load, i.e., a network load exceeding a predefined level, or
- a type of traffic type, e.g. file transfer versus voice/video call, or
- channel conditions, e.g., a UE located in an open area may have a more stable channel than a UE located in a valley, or
- interference management.

In accordance with the above described embodiment, the retransmission provides additional or incremental redundancy. The present invention is not limited to such embodiments, and in accordance with other embodiments, the retransmission may provide chase combining, and the user includes into the retransmission the same information as in original transmission.

In the following, additional embodiments and aspects of the invention will be described which can be used individually or in combination with any of the features and functionalities and details described herein.

A first aspect relates to a user equipment, wherein the user equipment is configured to transmit data to a receiver of a wireless communication system using resources of a channel granted by the receiver, the channel having a certain channel condition estimated by the receiver, and wherein the user equipment is preconfigured with one or more retransmission resources to be used for the retransmission, and wherein, responsive to a change of the channel condition, the user equipment is configured to
signal to the receiver, together with the data transmission, a retransmission indicating that a retransmission for the data is transmitted, and
transmit the retransmission using one or more of the retransmission resources.

According to a second aspect when referring back to the first aspect,
the signaling of the retransmission is decodable at the receiver independent from the data transmission, and/or
the signaling of the retransmission is transmitted in a dedicated region of the data transmission, the dedicated region being known at the receiver.

According to a third aspect when referring back to any one of the first to second aspects, the user equipment is configured to encode the signaling of the retransmission using a robust coding scheme, e.g., a coding scheme being more robust than a coding scheme used for encoding the data to be transmitted.

According to a fourth aspect when referring back to any one of the first to third aspects, the user equipment is configured to signal to the receiver, together with the data transmission, the retransmission resource on which the user equipment transmits the retransmission for the data.

According to a fifth aspect when referring back to any one of the first to fourth aspects, the user equipment is configured to signal the retransmission using:
a control information block inserted into the data transmission, or
a control information block preceding or following the data, or
a predefined signal inserted into the data transmission, or
a predefined signal preceding or following the data.

According to a sixth aspect when referring back to the fifth aspect, the control information block, e.g. an Uplink Control Information, UCI, block, or the predefined signal, e.g., a Demodulation Reference Signal, DMRS, sequence with a cyclic shift, indicates whether a retransmission is performed or not.

According to a seventh aspect when referring back to any one of the fifth or sixth aspects, the control information block includes:
a retransmission indicator and a retransmission index, the retransmission indicator indicating whether a retransmission is performed or not, and the retransmission index indicating the retransmission resource, or
a retransmission index having a certain value, wherein the certain value is selected from a plurality of values including:
   a value indicating that no retransmission is performed, and
   one or more value indicating the one or more retransmission resources.

According to an eighth aspect when referring back to any one of the fifth to seventh aspects, the predefined signal includes a DMRS sequence with a certain cyclic shift, wherein the certain cyclic shift is selected from a plurality of cyclic shifts including:
a cyclic shift indicating that no retransmission is performed, and
one or more cyclic shifts indicating the one or more retransmission resources.

According to a ninth aspect when referring back to any one of the fifth to seventh aspects, the predefined signal includes a certain DMRS sequence, which may have associated therewith a cyclic shift, wherein the certain DMRS sequence is selected from a plurality of DMRS sequences including:
a DMRS sequence indicating that no retransmission is performed, and
one or more DMRS sequences indicating the one or more retransmission resources.

According to a tenth aspect when referring back to any one of the first to ninth aspects, the user equipment is configured to select the retransmission resource from a plurality of retransmission resources, the plurality of retransmission resources being outside the resources granted by the receiver for the data transmission.

According to an eleventh aspect when referring back to the tenth aspect, the user equipment is configured to randomly select the retransmission resource from the plurality of retransmission resources.

According to a twelfth aspect when referring back to any one of the first to eleventh aspects, the user equipment is configured to
transmit the retransmission timely offset with respect to the data transmission, and
signal to the receiver, together with the data transmission, a time offset between the transmission and the retransmission.

According to a thirteenth aspect when referring back to any one of the first to twelfth aspects, the user equipment is configured to receive from the receiver, using, e.g., a DCI message or an RRC message, a configuration message specifying the plurality of retransmission resources, like a grant-free retransmission pool including the plurality of retransmission resources, and/or the time offset.

According to a fourteenth aspect when referring back to the thirteenth aspect, the configuration message indicates a frequency range of available resources for the retransmission, and/or the time offset relative to the granted data transmission.

According to a fifteenth aspect when referring back to any one of the first to fourteenth aspects, the user equipment and the receiver are configured to communicate using a Time Division Duplex, TDD, transmission or a Frequency Division Duplex, FDD, transmission According to a sixteenth aspect when referring back to the fifteenth aspect, when communicating using the Time Division Duplex, TDD, transmission, the user equipment is configured to if required by the channel, signals a retransmission in a scheduled UL part of the TDD frame, and uses, e.g., randomly, additional resources out of predefined resources for the retransmission, and the user equipment is configured to receive, during a downlink, DL, part of a TDD frame, from the receiver a signaling indicating the predefined resources for the retransmission in an upcoming uplink, UL, part of the TDD frame, e.g., using a control information like DCI or RRC, or the user equipment is preconfigured with the predefined resources for the retransmission.

According to a seventeenth aspect when referring back to any one of the first to sixteenth aspects, the user equipment is configured to
receive from the receiver the UL grant, based on the channel estimate by receiver,
prepare the UL data transmission,
determine whether a redundancy for the UL data transmission is sufficient for the channel given a current channel condition,
in case a channel estimate at the user equipment indicates a channel condition with sufficient redundancy, perform a regular UL data transmission using the granted resources, the regular UL data transmission not including a signaling of a retransmission, and
in case the channel estimate at the user equipment indicates a channel condition without sufficient redundancy, perform
   the UL data transmission using the granted resources including the signaling of the retransmission, and
   a retransmission of additional or incremental redundancy on the retransmission resource outside the granted resources.

According to an eighteenth aspect when referring back to the seventeenth aspect, the user equipment is configured to estimate the channel between the user equipment and the receiver.

According to a nineteenth aspect when referring back to any one of the first to eighteenth aspects, the user equipment is configured to transmit the data using one or more data blocks or data frames, wherein the signaling of the retransmission is included in at least one of the data blocks or data frames.

According to a twentieth aspect when referring back to any one of the first to nineteenth aspects, the user equipment is configured to initiate or cause the retransmission without a feedback from the receiver, e.g., only based on a current channel condition of the channel used for the data transmission.

According to a twenty-first aspect when referring back to any one of the first to twentieth aspects, the retransmission includes one or more of the following:
chase combining, and
incremental redundancy.

According to a twenty-second aspect when referring back to the twenty-first aspect,
in case of chase combining, the user equipment is configured to include into the retransmission the same information as in original transmission, or
in case of incremental redundancy, the user equipment is configured to include into the retransmission different parity bits than the in the original transmission, wherein the number of parity bits to be added to the retransmission parts may be determined based on the current channel condition.

According to a twenty-third aspect when referring back to any one of the first to twenty-second aspects, the user equipment is configured to receive a message causing the user equipment to disable, e.g., temporarily, the retransmission mechanism and to use the resources in the retransmission pool for other purposes, like a regular data transmission.

A twenty-fourth aspect relates to a receiver,
wherein the receiver is configured to receive data transmitted by a user equipment using resources of a channel of a wireless communication system granted by the receiver, and wherein the user equipment is preconfigured with one or more retransmission resources to be used for the retransmission, and
wherein the receiver is configured to
   decode from the data transmission of the user equipment a signaling indicating that a retransmission for the data is transmitted, and
   decode the retransmission on one or more of the retransmission resources.

According to a twenty-fifth aspect when referring back to the twenty-fourth aspect, the receiver is configured to decode from the data transmission of the user equipment one or more of:
a control information block inserted into the data transmission, e.g. an Uplink Control Information, UCI, block, and indicating whether a retransmission is performed or not, or
a predefined signal inserted into the data transmission, e.g., a Demodulation Reference Signal, DMRS, sequence with a cyclic shift, and indicating whether a retransmission is performed or not.

According to a twenty-sixth aspect when referring back to any one of the twenty-fourth to twenty-fifth aspects, the receiver is configured to decode from the data transmission of the user equipment a time offset between the transmission and the retransmission.

According to a twenty-seventh aspect when referring back to any one of the twenty-fourth to twenty-sixth aspects, the receiver is configured to provide to the user equipment a configuration message using, e.g., a DCI message or an RRC message, the configuration message configuring the user equipment for the retransmission on the one or more retransmission resources.

According to a twenty-eighth aspect when referring back to the twenty-seventh aspect, the receiver is configured to signal to the user equipment the one or more retransmission resources to be used for the retransmission, e.g., following a request for a UL transmission from the user equipment or together with a UL grant.

According to a twenty-ninth aspect when referring back to the twenty-seventh aspect, the configuration message specifies the plurality of retransmission resources, like a grant-free retransmission pool including the plurality of retransmission resources, and/or the time offset, and wherein the configuration message may indicate, e.g., a frequency range of available resources for the retransmission, and/or the time offset relative to the granted data transmission.

According to a thirtieth aspect when referring back to the twenty-ninth aspect, the receiver is configured to signal to the user equipment a modification of the preconfigured resources of the retransmission pool or a subset of the preconfigured resources of the retransmission pool to be used for the retransmission, e.g., following a request for a UL transmission from the user equipment or together with a UL grant.

According to a thirty-first aspect when referring back to any one of the twenty-fourth to thirtieth aspects, the receiver and the user equipment are configured to communicate using a Time Division Duplex, TDD, transmission or a Frequency Division Duplex, FDD, transmission

According to a thirty-second aspect when referring back to the thirty-first aspect, when communicating using the Time Division Duplex, TDD, transmission, the receiver is configured to signal to the user equipment resources for the retransmission in the upcoming UL part of a TDD frame, e.g., using a control information like DCI or RRC, during the DL part of the TDD frame.

According to a thirty-third aspect when referring back to any one of the twenty-fourth to thirty-second aspects, responsive to decoding the data transmission received from the user equipment, the receiver is configured to not send any feedback regarding the decoded data transmission back to the user equipment.

A thirty-fourth aspect relates to a receiver, wherein the receiver is configured to receive data transmitted by a user equipment using resources of a channel of a wireless communication system granted by the receiver, and wherein the receiver is configured to provide to the user equipment a configuration message using, e.g., a DCI message or an RRC message, the configuration message configuring the user equipment for the retransmission on one or more retransmission resources, the user equipment using the one or more retransmission resources for a retransmission, like additional or incremental redundancy, for the data.

According to a thirty-fifth aspect when referring back to the thirty-fourth aspect, the receiver is configured to signal to the user equipment the one or more retransmission resources to be used for the retransmission, e.g., following a request for a UL transmission from the user equipment or together with a UL grant.

According to a thirty-sixth aspect when referring back to the thirty-fifth aspect, the configuration message specifies the plurality of retransmission resources, like a grant-free retransmission pool including the plurality of retransmission resources, and/or the time offset, and wherein the configuration message may indicate, e.g., a frequency range of available resources for the retransmission, and/or the time offset relative to the granted data transmission.

According to a thirty-seventh aspect when referring back to the thirty-sixth aspect, the receiver is configured to signal to the user equipment a modification of the preconfigured resources of the retransmission pool or a subset of the preconfigured resources of the retransmission pool to be used for the retransmission, e.g., following a request for a UL transmission user equipment or together with a UL grant.

According to a thirty-eighth aspect when referring back to any one of the twenty-fourth to thirty-seventh aspects, the receiver is configured to transmit to the user equipment a message causing the user equipment to disable, e.g., temporarily, the retransmission mechanism and to use the resources in the retransmission pool for other purposes, like a regular data transmission.

According to a thirty-ninth aspect when referring back to the thirty-eighth aspect, the receiver is configured to transmit to the user equipment the message responsive to a predefined condition in the wireless communication system, e.g., a network load exceeding a predefined level, or a type of traffic, or a channel condition, or interference management.

A fortieth aspect relates to a wireless communication system, comprising:
one or more user equipments of any one of the first to twenty-third aspects, and
one or more receivers of any one of the twenty-fourth to thirty-ninth aspects,
wherein the wireless communication system includes
   a terrestrial network, or
   a non-terrestrial network, or
   networks or segments of networks using as a receiver an airborne vehicle or a spaceborne vehicle, or
   a combination thereof.

According to a forty-first aspect when referring back to the fortieth aspect,
the user equipment comprises one or more of:
   a mobile or stationary terminal,
   an IoT device,
   a ground based vehicle,
   an aerial vehicle,
   a drone,
   a building, or
   any other item or device provided with network connectivity enabling the item/device to communicate using the wireless communication network, like a sensor or actuator, and
the receiver comprises one or more:
   a macro cell base station, or
   a small cell base station, or
   a spaceborne vehicle, like a satellite or a space vehicles at a specific altitude and orbital period, e.g., a low earth orbit (LEO), a medium earth orbit (MEO), a geosynchronous orbit (GSO), a geostationary orbit (GEO), or a high earth orbit (HEO), or
   an airborne vehicle, like a unmanned aircraft system (UAS), e.g., a tethered UAS, a lighter than air UAS (LTA), a heavier than air UAS (HTA) and a high altitude UAS platforms (HAPs), or
   any transmission/reception point (TRP) enabling an item or a device provided with network connectivity to communicate using the wireless communication network.

According to a forty-second aspect when referring back to any one of the fortieth to forty-first aspects, the wireless communication system uses an Inverse Fast Fourier Transform, IFFT, based signal, wherein the IFFT based signal includes OFDM with CP, DFT-s-OFDM with CP, IFFT-based waveforms without CP, f-OFDM, FBMC, GFDM or UFMC.

A forty-third aspect relates to a method for transmitting in a wireless communication system data from a user equipment to a receiver, wherein the user equipment is preconfigured by the receiver with one or more resources to be used for a retransmission for the data, the method comprising:
granting, by the receiver, resources of a channel for the transmission of the data from the user equipment to the receiver, the channel having a certain channel condition estimated by the receiver, and
transmitting, by the user equipment, the data to the receiver using the resources granted by the receiver,
determining the channel condition at the user equipment,
responsive to a change of the channel condition, signaling to the receiver, together with the data transmission, a retransmission indicating that a retransmission for the data is transmitted, and
transmitting the retransmission using one or more of the retransmission resources.

A forty-fourth aspect relates to a method for receiving in a wireless communication system data from a user equipment at a receiver, wherein the user equipment is preconfigured by the receiver with one or more resources to be used for a retransmission for the data, the method comprising:
receiving, at the receiver, data transmitted by the user equipment using resources of a channel of the wireless communication system granted by the receiver,
decoding from the data transmission of the user equipment a signaling indicating that a retransmission for the data is transmitted, and
decoding the retransmission on one or more of the retransmission resources.

A forty-fifth aspect relates to a computer program product comprising instructions which, when the program is executed by a computer, cause the computer to carry out the method of any one of the forty-third to forty-fourth aspects.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 8 illustrates an example of a computer system 350. The units or modules as well as the steps of the methods performed by these units may execute on one or more computer systems 350. The computer system 350 includes one or more processors 352, like a special purpose or a general purpose digital signal processor. The processor 352 is connected to a communication infrastructure 354, like a bus or a network. The computer system 350 includes a main memory 356, e.g., a random access memory (RAM), and a secondary memory 358, e.g., a hard disk drive and/or a removable storage drive. The secondary memory 358 may allow computer programs or other instructions to be loaded into the computer system 350. The computer system 350 may further include a communications interface 360 to allow software and data to be transferred between computer system 350 and external devices. The communication may be in the from electronic, electromagnetic, optical, or other signals capable of being handled by a communications interface. The communication may use a wire or a cable, fiber optics, a phone line, a cellular phone link, an RF link and other communications channels 362.

The terms "computer program medium" and "computer readable medium" are used to generally refer to tangible storage media such as removable storage units or a hard disk installed in a hard disk drive. These computer program products are means for providing software to the computer system 350. The computer programs, also referred to as computer control logic, are stored in main memory 356 and/or secondary memory 358. Computer programs may also be received via the communications interface 360. The computer program, when executed, enables the computer system 350 to implement the present invention. In particular, the computer program, when executed, enables processor 352 to implement the processes of the present invention, such as any of the methods described herein. Accordingly, such a computer program may represent a controller of the computer system 350. Where the disclosure is implemented using software, the software may be stored in a computer program product and loaded into computer system 350 using a removable storage drive, an interface, like communications interface 360.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

### List of Acronyms and Symbols

| | |
|---|---|
| BCG | Block Code Group |
| eNB | Evolved Node B (3G base station) |
| GEO | Geostationary Earth Orbiting |
| HARQ | Hybrid automatic repeat request |
| IoT | Internet of Things |
| LEO | Low Earth Orbiting |
| LTE | Long-Term Evolution |
| MEO | Medium Earth Orbiting |
| NR | New Radio |
| UAS | Unmanned Aerial System |
| UE | User Equipment |
| URLCC | Ultra-Reliable Low latency Communications |
| TB | Transport Block |

### References

| | |
|---|---|
| [1] | Huawei & HiSilicon, "NTN Channel Modeling" 3GPP Technical Document-R1-1719844, Reno, USA, November 2017. |
| [2] | 3GPP TR 38.811 V0.2.0, Study on New Radio (NR) to support Non Terrestrial Networks (Release 15), Sep. 2017. |

## Claims

1. A user equipment, wherein
the user equipment is configured to transmit data to a receiver of a wireless communication system using resources of a channel granted by the receiver, the channel having a certain channel condition estimated by the receiver, and
the user equipment is preconfigured with one or more retransmission resources to be used for the retransmission, and wherein, responsive to a change of the channel condition, the user equipment is configured to
signal to the receiver, together with the data transmission, a retransmission indicating that a retransmission for the data is transmitted, and
transmit the retransmission using one or more of the retransmission resources.

2. The user equipment of claim 1, wherein
the signaling of the retransmission is decodable at the receiver independent from the data transmission, and/o
the signaling of the retransmission is transmitted in a dedicated region of the data transmission, the dedicated region being known at the receiver.

3. The user equipment of claim 1 or 2, wherein the user equipment is configured to encode the signaling of the retransmission using a robust coding scheme, e.g., a coding scheme being more robust than a coding scheme used for encoding the data to be transmitted.

4. The user equipment of any one of the preceding claims, wherein the user equipment is configured to signal to the receiver, together with the data transmission, the retransmission resource on which the user equipment transmits the retransmission for the data.

5. The user equipment of any one of the preceding claims, wherein the user equipment is configured to signal the retransmission using:
a control information block inserted into the data transmission, or
a control information block preceding or following the data, or
a predefined signal inserted into the data transmission, or
a predefined signal preceding or following the data.

6. The user equipment of claim 5, wherein the predefined signal includes a DMRS sequence with a certain cyclic shift, wherein the certain cyclic shift is selected from a plurality of cyclic shifts including:
a cyclic shift indicating that no retransmission is performed, and
one or more cyclic shifts indicating the one or more retransmission resources.

7. The user equipment of claim 6, wherein the predefined signal includes a certain DMRS sequence, which may have associated therewith a cyclic shift, wherein the certain DMRS sequence is selected from a plurality of DMRS sequences including:
a DMRS sequence indicating that no retransmission is performed, and
one or more DMRS sequences indicating the one or more retransmission resources.

8. The user equipment of any one of the preceding claims, wherein the user equipment is configured to select the retransmission resource from a plurality of retransmission resources, the plurality of retransmission resources being outside the resources granted by the receiver for the data transmission.

9. The user equipment of claim 8, wherein the user equipment is configured to randomly select the retransmission resource from the plurality of retransmission resources.

10. The user equipment of any one of the preceding claims, wherein the user equipment is configured to
transmit the retransmission timely offset with respect to the data transmission, and
signal to the receiver, together with the data transmission, a time offset between the transmission and the retransmission.

11. The user equipment of any one of the preceding claims, wherein the user equipment is configured to receive from the receiver, using, e.g., a DCI message or an RRC message, a configuration message specifying the plurality of retransmission resources, like a grant-free retransmission pool including the plurality of retransmission resources, and/or the time offset.

12. A receiver, wherein
the receiver is configured to receive data transmitted by a user equipment using resources of a channel of a wireless communication system granted by the receiver, and wherein the user equipment is preconfigured with one or more retransmission resources to be used for the retransmission, and
the receiver is configured to
decode from the data transmission of the user equipment a signaling indicating that a retransmission for the data is transmitted, an
decode the retransmission on one or more of the retransmission resources.

13. The user equipment of claim 12, wherein the receiver is configured to decode from the data transmission of the user equipment a time offset between the transmission and the retransmission.

14. A method for transmitting in a wireless communication system data from a user equipment to a receiver, wherein the user equipment is preconfigured by the receiver with one or more resources to be used for a retransmission for the data, the method comprising:
granting, by the receiver, resources of a channel for the transmission of the data from the user equipment to the receiver, the channel having a certain channel condition estimated by the receiver, and
transmitting, by the user equipment, the data to the receiver using the resources granted by the receiver,
determining the channel condition at the user equipment,
responsive to a change of the channel condition, signaling to the receiver, together with the data transmission, a retransmission indicating that a retransmission for the data is transmitted, and
transmitting the retransmission using one or more of the retransmission resources.

15. A method for receiving in a wireless communication system data from a user equipment at a receiver, wherein the user equipment is preconfigured by the receiver with one or more resources to be used for a retransmission for the data, the method comprising:
receiving, at the receiver, data transmitted by the user equipment using resources of a channel of the wireless communication system granted by the receiver,
decoding from the data transmission of the user equipment a signaling indicating that a retransmission for the data is transmitted, and
decoding the retransmission on one or more of the retransmission resources.
